(19) Europäisches Patentamt
European Patent Office
Office européen des brevets

(11) EP 2 354 176 B1

(12) EUROPÄISCHE PATENTSCHRIFT

(45) Veröffentlichungstag und Bekanntmachung des Hinweises auf die Patenterteilung:
**15.11.2017 Patentblatt 2017/46**

(51) Int Cl.:
***C08G 69/26*** *(2006.01)* ***C08L 77/06*** *(2006.01)*

(21) Anmeldenummer: **10151933.8**

(22) Anmeldetag: **28.01.2010**

(54) **Teilaromatische Formmassen und deren Verwendungen**

Partially aromatic moulding masses and their applications

Masses de formage partiellement aromatiques et leurs utilisations

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**10.08.2011 Patentblatt 2011/32**

(73) Patentinhaber: **EMS-PATENT AG**
**7013 Domat / Ems (CH)**

(72) Erfinder:
- **Hewel, Manfred Dr.**
  **7013 Domat/Ems (CH)**
- **Bayer Andreas**
  **7013 Domat/Ems (CH)**

(74) Vertreter: **Bremi, Tobias Hans**
**Isler & Pedrazzini AG**
**Giesshübelstrasse 45**
**Postfach 1772**
**8027 Zürich (CH)**

(56) Entgegenhaltungen:
**EP-A1- 1 542 295** **EP-A1- 1 795 632**
**EP-A1- 1 988 113** **GB-A- 1 228 761**
**US-A- 4 617 342** **US-A- 4 831 108**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

TECHNISCHES GEBIET

Die vorliegende Erfindung betrifft Polyamid-Formmassen auf Basis eines Terephthalsäure-Copolyamids sowie Verfahren zu deren Herstellung und Verwendungen davon.

STAND DER TECHNIK

Im Elektro- und Elektronikbereich werden polymere Materialien benötigt,

- die auch nach Wasseraufnahme mit bleifreiem Lot bei 260°C Oberflächentemperatur ohne Blasen (Blister) lötbar sind,
- die halogenfrei flammgeschützt sind,
- die bei niedrigen Drücken und hohen Fliesslängen gut verarbeitbar sind,
- die wenig Verzug haben und
- die dimensionsstabil sind.

Teilaromatische Polyamide des Typs PA6T/6I, wie sie in der US 4,607,073 beschrieben sind, haben gegenüber den aliphatischen Polyamiden PA6, PA66 und PA46 eine reduzierte Wasseraufnahme und hohe Schmelzpunkte. Sie lassen sich bereits als Rohpolymer gut löten. Die halogenfreie Flammschutzausrüstung ist wegen der limitierten Temperaturstabilität des Flammschutzes allerdings problematisch. Niedrige Drücke und hohe Fliesslängen beim Spritzguss sind erst bei sehr hohen Massetemperaturen möglich, bei denen bereits der Abbau des Polyamids eintritt. Die Verarbeitung ist wegen des engen Verarbeitungsfensters äusserst problematisch.

Teilaromatische Polyamide des Typs PA6T/66 gemäss JP-B-2928325 (offengelegt als JP-A-308846) haben hohe Schmelzpunkte aber zu hohe Wasseraufnahmen. Sie lassen sich nur im trockenen Zustand löten und erreichen maximal ein Feuchtigkeitssensitivitätslevel (Moisture Sensitivity Level SML gemäss Joint Industry Standard IPC/JEDEC J-STD-020D.1) von 2. Sie können vor dem Löten maximal für 168 Stunden bei 85°C und 60% relativer Feuchte konditioniert werden. Dies bedeutet in der Regel, dass die elektronischen Bauteile aus diesen Materialien nicht unbeschränkt lagerbar sind und bis zum Löten feuchtigkeitsdicht verpackt sein müssen.

In der EP 1 988 113 werden Polyamide mit 40 bis 95 Mol-% 10T-Einheiten, gebildet aus den Monomeren 1,10-Decandiamin und Terephthalsäure, und 5 bis 60 Mol-% 6T-Einheiten, gebildet aus den Monomeren 1,6-Hexandiamin und Terephthalsäure, beschrieben. Diese Polyamide haben hohe Wärmeformbeständigkeiten, gute Verarbeitbarkeit, niedrige Wasseraufnahme, unveränderte mechanische Eigenschaften nach Wasseraufnahme, gute Oberflächenqualität der glasfaserverstärkten Produkte und hohe Dimensionsstabilität. Die Lötbarkeit bei 260°C nach Wasseraufnahme ist deutlich besser als die von teilaromatischen Polyamiden des Typs PA6T/66. Aber die Lötbarkeit der elektrischen und elektronischen Bauteile aus PA10T/6T ist grenzwertig, das heisst sie können das höchste Feuchtigkeitssensitivitätslevel (Moisture Sensitivity Level SML gemäss Joint Industry Standard IPC/JEDEC J-STD-020D.1) von 1 nur bei geeignetem Design erreichen. Bei Konnektoren der kritischen Dicke und Metalleinlegern, die die Wärme nach innen führen, können beim Löten Blasen entstehen.

Aus der US 4617342 sind kristalline Polyamide bekannt, welche auf Basis von Terephthalsäure und Isophthalsäure, in einem Verhältnis von 80:20-99:1 vorgelegt, sowie von Hexamethylendiamin (HMDA) und Trimethylhexamethylendiamin (THMDA), in einem molaren Verhältnis im Bereich von 98:2-60:40 vorgelegt, erhalten werden. Als Anwendungen für derartige Polyamide werden Bauteile mit hoher Wärmebeständigkeit beispielsweise im Motorenbereich von Automobilen vorgeschlagen. Es wird in diesem Dokument ausschließlich von einer Kombination von HMDA und THMDA gesprochen, und in den Beispielen ist der Anteil von dem neben Hexamethylendiamin vorliegenden THMDA niedrig, im Bereich von 5-7 Mol-%. Die Aufgabe besteht hier darin, Polyphthalamide bereitzustellen, die eine höhere Festigkeit aufweisen. Hierzu wird der TPS-Gehalt auf mindestens 80 mol-% eingestellt. Diese Massnahme führt aber dazu, dass diese Materialien kaum noch herstell- und verarbeitbar sind. Daher wird ein Teil HMDA durch TMHMDA ausgetauscht. Dieses verzweigte C9-Diamin erhöht die Konzentration der amorphen Domänen, so dass aufgrund der niedrigeren Kristallinität die Formmassen wieder handhabbar werden. Für Lötanwendungen sind diese Systeme aber nicht geeignet. Aus der GB 1228761 werden vollständig amorphe Polyamide auf Basis von Terephthalsäure und Isophthalsäure angegeben, wobei der Anteil an Isophthalsäure hoch ist. Das in diesem Dokument zwingend eingesetzte Diamin Isophorondiamin, ein C9-Diamin, kann in seiner Wirkung mit derjenigen von TMHMDA verglichen werden. Zudem ist die Konzentration von IPS in allen Beispielen mindestens 50 mol-%. Solche Formmassen sind nicht lötbar und erfüllen bei weitem nicht die geforderten mechanischen Eigenschaften.

Aus der US 4831108 ist ein Herstellverfahren für Polyamide bekannt, das wohl für eine Reihe völlig unterschiedlicher Polyamide geeignet zu sein scheint. So wird überraschend neben der Herstellung von Polyphthalamiden

auch die Herstellung von PA66 (Bsp. 4) mit dem gleichen Verfahren beschrieben. Soweit in diesem Dokument überhaupt auf ein THMDA hingewiesen wird, so wird dieses Diamin stets in einem niedrigen Anteil eingesetzt.

Aus der EP 1795632 ist ein Polyamid bekannt, welches auf Basis von unterschiedlichsten Ausgangsmaterialien erhalten werden kann. Als Diamine werden unter anderem auch C9-Diamine genannt, darunter 1.9-Nonandiamin und 1.8-Methyloctandiamin. Unter anderem werden diese Diamine in Kombination mit HMDA mit TPS und IPS umgesetzt. Dabei wird mit einer sehr niedrigeren HMDA-Konzentration gearbeitet (HMDA:C9-Diamin=20:80), oder das Hexamethylendiamin sogar durch THMDA ausgetauscht, was die resultierenden Materialien für Lötanwendungen schlecht oder gar nicht geeignet macht.

DARSTELLUNG DER ERFINDUNG

Es ist Aufgabe der Erfindung, Polyamid-Formmassen zur Verfügung zu stellen, aus denen elektrische und/oder elektronische Bauteile hergestellt werden können, die sich insbesondere bei 260°C und eventuell höheren Temperaturen nach Wasseraufnahme und kritischen Designs der Bauteile sicher löten lassen, das heisst insbesondere keine Blasen beim Lötprozess bilden.

Zudem sind die anderen Forderung der Elektro- und Elektronikindustrie zu erfüllen. Die Polyamid-Formmassen sollen:

- halogenfrei flammgeschützt werden können,
- bei niedrigen Drücken und hohen Fliesslängen gut verarbeitbar sein,
- wenig Verzug haben und
- dimensionsstabil sein.

Die Aufgabe wird gelöst durch Polyamidformmassen, enthaltend Copolyamide bestehend aus Terephthalsäure (TPS), Isophthalsäure (IPS), 1,6-Hexandiamin (HMDA) und einem weiteren aliphatischen Diamin mit 9 bis 12 Kohlenstoffatomen (C9-C12-Diamin), wobei ein definierter Gehalt an C9-C12-Diamin, ausgewählt aus der Gruppe: 1,9-Nonandiamin, 1,10-Decandiamin, 1,11-Undecandiamin, 1,12-Dodecandiamin, oder eine Mischung derartiger Diamine, und Isophthalsäure eingehalten wird. Diese Copolyamide zeichnen sich bevorzugtermassen durch einen Schmelzpunkt im Bereich von 300 bis 330°C, eine hohe Kristallinität, eine Glasübergangstemperatur bevorzugtermassen im Bereich von 110 bis 140°C und bevorzugtermassen eine Lötbarkeit (Definition siehe nachfolgend) des Rohpolymeren (Polyamid) von mehr als 85% und der Compounds von mehr als 75% aus. Die Lötbarkeit wird definiert als relativer Anteil der positiv geprüften Stäbe drei verschiedener Dicken ohne Blasen (Blister) bei 6 verschiedenen Prüfbedingungen nach 168h Konditionierung bei 85°C und 85% relativer Feuchte gemäss Joint Industry Standard IPC/JEDEC J-STD-020D.1. Die Compounds enthalten neben der Polyamidmatrix vorzugsweise Füll- und/oder Verstärkungsstoffe und/oder Flammschutzmittel sowie Additive.

Konkret ist eine Polyamid-Formmasse mit folgender Zusammensetzung Gegenstand dieser Erfindung:

(A) 30-100 Gew.-% eines teilaromatischen, teilkristallinen Copolyamids aufgebaut aus 100 Gew.-% Disäureanteil zusammengesetzt aus:

72.0-98.3 Gew.-% Terephthalsäure (TPS) und/oder Naphthalindicarbonsäure;
28.0-1.7 Gew.-% Isophthalsäure (IPS)

und 100 Gew.-% Diaminanteil zusammengesetzt aus:

51.0-80.0 Gew.-% 1,6-Hexandiamin (HMDA);
20.0-49.0 Gew.-% C9-C12 Diamin ausgewählt aus der Gruppe: 1,9-Nonandiamin, 1,10-Decandiamin, 1,11-Undecandiamin, 1,12-Dodecandiamin, oder eine Mischung derartiger Diamine;

(B) 0-70 Gew.-% Füll- und Verstärkungsmittel;
(C) 0-25 Gew.-% Flammschutzmittel;
(D) 0-5 Gew.-% Additive;

wobei sich die Komponenten (A)-(D) auf 100 Gew.-% ergänzen.

TPS kann also ganz oder teilweise durch Naphthalindicarbonsäure ersetzt werden.

Gemäß einer ersten bevorzugten Ausführungsform handelt es sich beim C9-C12 Diamin um ein Diamin ausgewählt aus der Gruppe: 1,10-Decandiamin, 1,12-Dodecandiamin, oder eine Mischung derartiger Diamine, wobei besonders 1,10-Decandiamin allein bevorzugt ist.

Bevorzugtermassen ist der Diaminanteil der Komponente (A) zusammengesetzt aus 55.0-75.0 Gew.-% 1,6-Hexandiamin (HMDA) ausgewählt aus der Gruppe: 1,9-Nonandiamin, 1,10-Decandiamin, 1,11-Undecandiamin, 1,12-Dodecandiamin, oder eine Mischung derartiger Diamine;
25.0-45.0 Gew.-% C9-C12 Diamin.

Weiterhin bevorzugtermassen ist der Diaminanteil der Komponente (A) zusammengesetzt ist aus 55.0-70.0 Gew.-% 1,6-Hexandiamin (HMDA) und 30.0-45.0 Gew.-% C9-C12 Diamin ausgewählt aus der Gruppe: 1,9-Nonandiamin, 1,10-Decandiamin, 1,11-Undecandiamin, 1,12-Dodecandiamin, oder eine Mischung derartiger Diamine.

Gemäß einer bevorzugten Ausführungsform der Erfindung stehen der Anteil an C9-C12-Diaminen und der Anteil an Isophthalsäure in einem bestimmten Verhältnis-Bereich zueinander. Konkret bedeutet dies, dass gemäß dieser bevorzugten Ausführungsform der Disäureanteil der Komponente (A) zusammengesetzt ist aus

72.0-98.3 Gew.-% Terephthalsäure (TPS) und/oder Naphthalindicarbonsäure und einem Isophthalsäure (IPS) Gehalt in einem Gew.%-Bereich ermittelt als Funktion des Gehalts an C9-C12 Diamin in Prozenten des Diaminanteils. Der Gehalt an Isophthalsäure in Gewichtsprozent ermittelt sich dabei nach der Formel

$$\text{IPS (Gew.-\%)} = (39\text{-}0.7\text{*C9-C12 Diamin})$$

mit einer Bereichbreite von +/- 5 Gew.-%. Natürlich mit der Maßgabe, dass der Gehalt an Isophthalsäure stets mindestens 1.7 Gew.-% beträgt.

Dies heißt, dass beispielsweise bei einem Gehalt von C9-C12-Diaminen von 20 Gew.-% der Gehalt an Isophthalsäure im Bereich von 20-30 Gew.-% liegt. Bei einem Gehalt von C9-C12-Diaminen von 35 Gew.-% liegt der Gehalt an Isophthalsäure im Bereich von 9.5-19.5 Gew.-%. Bei einem Gehalt von C9-C12-Diaminen von 49 Gew.-% liegt der Gehalt an Isophthalsäure im Bereich von 1.7 -9.7 Gew.-%.

Gemäß einer weiteren bevorzugten Ausführungsform ist dabei die Bereichsbreite +/- 3 Gew.-%, insbesondere vorzugsweise +/- 2 Gew.-%.

Bevorzugt sind also Polyamide mit einem C9-C12-Diamin-Gehalt von 20 bis 49 Gew.-% bezogen auf die Summe der Diamine und einem IPS-Gehalt von (39 - 0.7*C9-C12-Diamin) ± 5 Gew.-% bezogen auf die Summe der Disäuren, wobei der Gehalt an IPS stets mindestens 1.7 Gew.-% beträgt.

In weiteren besonderen Ausführungsformen werden folgende Zusammensetzungen für die Copolyamide (Polyamidmatrix) bevorzugt:

Copolyamide mit einem C9-C12-Diamin-Gehalt von 20 bis 49 Gew.-% bezogen auf die Summe der Diamine und einem IPS-Gehalt von (39 - 0.7*C9-C12-Diamin) ± 3 Gew.-% bezogen auf die Summe der Disäuren.

Copolyamide mit einem C9-C12-Diamin-Gehalt von 20 bis 49 Gew.-% bezogen auf die Summe der Diamine und einem IPS-Gehalt von (39 - 0.7*C9-C12-Diamin) ± 2 Gew.-% bezogen auf die Summe der Disäuren.

Bevorzugt sind Polyamide mit einem C9-C12-Diamin-Gehalt von 25 bis 45 Gew.-% bezogen auf die Summe der Diamine und einem IPS-Gehalt von (39 - 0.7*C9-C12-Diamin) ± 5 Gew.-% bezogen auf die Summe der Disäuren.

Copolyamide mit einem C9-C12-Diamin-Gehalt von 25 bis 45 Gew.-% bezogen auf die Summe der Diamine und einem IPS-Gehalt von (39 - 0.7*C9-C12-Diamin) ± 3 Gew.-% bezogen auf die Summe der Disäuren.

Copolyamide mit einem C9-C12-Diamin-Gehalt von 25 bis 45 Gew.-% bezogen auf die Summe der Diamine und einem IPS-Gehalt von (39 - 0.7*C9-C12-Diamin) ± 2 Gew.-% bezogen auf die Summe der Disäuren.

Bevorzugt sind Polyamide mit einem C9-C12-Diamin-Gehalt von 30 bis 45 Gew.-% bezogen auf die Summe der Diamine und einem IPS-Gehalt von (39 - 0.7*C9-C12-Diamin) ± 5 Gew.-% bezogen auf die Summe der Disäuren.

Copolyamide mit einem C9-C12-Diamin-Gehalt von 30 bis 45 Gew.-% bezogen auf die Summe der Diamine und einem IPS-Gehalt von (39 - 0.7*C9-C12-Diamin) ± 3 Gew.-% bezogen auf die Summe der Disäuren.

Copolyamide mit einem C9-C12-Diamin-Gehalt von 30 bis 45 Gew.-% bezogen auf die Summe der Diamine und einem IPS-Gehalt von (39 - 0.7*C9-C12-Diamin) ± 2 Gew.-% bezogen auf die Summe der Disäuren.

Von den weiteren aliphatischen Diaminen (C9-C12-Diamin) werden 1,10-Decandiamin und 1,12-Dodecandiamin bevorzugt, und 1,10-Decandiamin besonders bevorzugt eingesetzt.

Der Anteil an Komponente (B) liegt gemäß einer weiteren bevorzugten Ausfuhrungsform im Bereich von 20-65 Gew.-%.

Das teilaromatische, teilkristalline Copolyamid (Komponente (A)) hat eine Lösungsviskosität $\eta_{rel}$, gemessen in m-Kresol (0,5 Gew.-%, 20°C), von höchstens 2.0, bevorzugt von höchstens 1,9, insbesondere von höchstens 1,8. Bevorzugt werden Copolyamide mit einer Lösungsviskosität $\eta_{rel}$ im Bereich von 1,45 bis 2.0, insbesondere im Bereich von 1.5 bis 1.9 oder 1.5 bis 1.8.

Die Copolyamide (Komponente A) haben bevorzugtermassen eine Glasübergangstemperatur im Bereich von

110 bis 140°C, bevorzugt im Bereich von 115 bis 135°C und insbesondere im Breichinsbesondere im Bereich von 120 bis 130°C.

Der Schmelzpunkt liegt vorzugsweise im Bereich von 300 bis 330°C, bevorzugt im Bereich von 305 bis 325°C und insbesondere im Bereich von 310 bis 325°C.

Die Schmelzenthalpie der Copolyamide liegt bevorzugtermassen im Bereich von 30 bis 60 J/g, bevorzug im Bereich von 35 bis 60 J/g und besonders bevorzugt im Bereich von 40 bis 60 J/g.

Weiterhin werden die Zusammensetzungen bevorzugtermassen so eingestellt, dass die Komponente (A) und/oder die ganze Polyamid-Formmasse eine Wasseraufnahme von weniger als 5 Gew.-%, bevorzugt weniger als 4 Gew.-%. aufweist, z.B. nach 336h in Wasser bei 95°C.

Gemäß einer weiteren bevorzugten Ausführungsform der vorgeschlagenen Polyamid-Formmasse handelt es sich bei den Füll- und Verstärkungsmitteln der Komponente (B) um Fasern, insbesondere um Glas- und/oder Kohlenstofffasern, wobei insbesondere bevorzugt Kurzfasern, bevorzugt mit einer Länge im Bereich von 2-50 mm und einem Durchmesser von 5 bis 40 μm und/oder Endlosfasern eingesetzt werden, und wobei insbesondere Fasern mit kreisförmiger und/oder nicht-kreisförmiger Querschnittsfläche eingesetzt werden, wobei im Letzteren Fall bevorzugtermassen das Abmessungsverhältnis von der Hauptquerschnittsachse zur Nebenquerschnittsachse >2, vorzugsweise im Bereich von 2-8, insbesondere bevorzugt im Bereich von 2-5 liegt.

Dabei werden Glasfasern mit nicht-kreisförmiger Querschnittsfläche und einem Abmessungsverhältnis von der Hauptquerschnittsachse zur Nebenquerschnittsachse von mehr als 2 bevorzugt von 2 bis 8, insbesondere von 2 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), rechteckige oder nahezu rechteckige Querschnittsfläche auf.

Die erfindungsgemässen flachen Glasfasern mit nicht-kreisförmiger Querschnittsfläche werden bevorzugt als Kurzglasfaser (Schnittglas mit einer Länge von 0.2 bis 20 mm, bevorzugt 2 - 12 mm) eingesetzt.

Ein weiteres kennzeichnendes Merkmal der eingesetzten flachen Glasfasern besteht darin, dass die Länge der Hauptquerschnittsachse bevorzugt im Bereich von 6 bis 40 μm, insbesondere im Bereich von 15 bis 30 μm und die Länge der Nebenquerschnittsachse im Bereich von 3 bis 20 μm, insbesondere im Bereich von 4 bis 10 μm liegt.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern wie oben definiert bevorzugtermassen überwiegt, d.h. mehr als 50 Gew.-% der Gesamtmasse der Fasern ausmacht.

Werden verstärkte Formmassen mit guter Fliessfähigkeit und guter Oberflächenqualität angestrebt, insbesondere in Kombination mit Flammschutzmitteln, dann bestehen die Verstärkungsfasern bevorzugt überwiegend (d.h. z.B. mehr als 80 Gew.-% oder sogar mehr als 90 Gew.-%) aus flachen Glasfasern oder sogar ausschliesslich aus flachen Glasfasern.

Die erfindungsgemäss als Roving (Füllstoffkomponente B) eingesetzten Glasfasern weisen einen Durchmesser von 10 bis 20 μm, bevorzugt von 12 bis 18 μm auf, wobei der Querschnitt der Glasfasern rund, oval, elliptisch, nahezu rechteckig oder rechteckig sein kann. Besonders bevorzugt werden sogenannte flache Glasfasern mit einem Verhältnis der Querschnittsachsen von 2 bis 5. Insbesondere werden erfindungsgemäss E-Glasfasern verwendet. Es können aber auch alle anderen Glasfasersorten, wie z.B. A-, C-, D-, M, S-, R-Glasfasern oder beliebige Mischungen davon oder Mischungen mit E-Glasfasern eingesetzt werden.

Bei langfaserverstärkten Formmassen ergeben sich höhere Zähigkeiten und somit noch metallähnlichere Eigenschaften, wenn anstatt der üblichen Endlosglasfaser mit einem Durchmesser von 15 bis 19 μm, solche mit einem Durchmesser von 10 bis 14 μm, insbesondere solche mit einem Durchmesser von 10 bis 12 μm verwendet werden.

Die erfindungsgemässen Polyamidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschliessend abgekühlt und geschnitten wird.

Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden.

Die beim Pultrusionsverfahren eingesetzten Endlos-Kohlefasern weisen einen Durchmesser von 5 bis 10 μm (Mikrometer), bevorzugt 6 bis 8 μm auf. Zur Verbesserung der Matrixanbindung und des Faserhandlings können die Fasern mit chemisch unterschiedlichen Schichten, wie sie für Glas- und Kohlefasern im Stand der Technik bekannt sind, beschichtet sein.

Die Glasfaser selbst, unabhängig von der Form der Querschnittsfläche und Länge der Faser, kann dabei ausgewählt sein aus der Gruppe aus E-Glasfasern, A-Glasfasern, C-Glasfasern, D-Glasfasern, M-Glasfasern, S-Glasfasern und/oder R-Glasfasern, wobei E-Glasfasern bevorzugt sind.

Bei den Füll- und Verstärkungsmitteln der Komponente (B) kann es sich auch um teilchenförmige Füllstoffe handeln, oder eine Mischung aus Fasern und teilchenförmigen Füllstoffen. Dabei können als teilchenförmige Füllstoffe

vorzugsweise mineralische Füllstoffe auf Basis von Talk, Glimmer, Silikat, Quarz, Titandioxid, Wollastonit, Kaolin, amorphe Kieselsäuren, Magnesium-carbonat, Magnesiumhydroxid, Kreide, Kalk, Feldspat, Bariumsulfat, Voll- oder Hohl-Glaskugeln oder gemahlenem Glas, dauerhaft magnetische bzw. magnetisierbare Metallverbindungen und/oder Legierungen respektive Mischungen eingesetzt werden. Die Füllstoffe können auch oberflächenbehandelt sein.

Gemäß einer weiteren bevorzugten Ausführungsform ist die Polyamid-Formmasse dadurch gekennzeichnet, dass der Anteil an Komponente (C) im Bereich von 8-25 Gew.-% liegt, vorzugsweise im Bereich von 10-22 Gew.-%, insbesondere bevorzugtermassen im Bereich von 10-18 Gew.-% liegt.

Bevorzugtermassen setzt sich die Komponente (C) zusammen aus 60-100 Gew.-%, vorzugsweise 70-98 Gew.-%, insbesondere vorzugsweise 80-96 Gew.-% eines Phosphinsäuresalzes und/oder Diphosphinsäuresalzes und 0-40 Gew.-%, respektive 2-30 Gew.-%, respektive 4-20 Gew.-% eines stickstoffhaltigen Synergisten und/oder eines Stickstoff und/oder Phosphor enthaltenden Flammschutzmittels, wobei Letztere vorzugsweise ausgewählt sind aus Melamin oder Kondensationsprodukten des Melamins, wie insbesondere Melem, Melam, Melon, oder Umsetzungsprodukte von Melamin mit Polyphosphorsäure oder Umsetzungsprodukte von Kondensationsprodukten des Melamins mit Polyphosphorsäure oder Gemische davon, insbesondere Melaminpolyphosphat.

Die erfindungsgemässe Formmasse enthält also in einer weiteren Ausführungsform weiterhin noch 8 - 25 Gew.-%, bevorzugt 10 - 22 Gew.-% und insbesondere 10 - 18 Gew.-% eines Flammschutzmittels (als teilweiser Bestandteil der Komponente (C) oder diese Komponente (C) als ganzes bildend). Bevorzugtermassen ist das Flammschutzmittel halogenfrei.

Das Flammschutzmittel in der Komponente (C) oder die Komponente (C) als ganzes bildend umfasst dabei bevorzugtermassen 60 - 100 Gew.-%, bevorzugt 70 - 98 Gew.-%, insbesondere 80 - 96 Gew.-% eines Phosphinsäuresalzes und/oder Diphosphinsäuresalzes (Komponente (C1)) sowie 0 - 40 Gew.-%, bevorzugt 2 - 30 Gew.-%, insbesondere 4 - 20 Gew.-% eines stickstoffhaltigen Synergisten und/oder eines Stickstoff und Phosphor enthaltenden Flammschutzmittels (Komponente (C2)).

Bei Komponente (C2) handelt es sich bevorzugt um Melamin oder Kondensationsprodukte des Melamins, wie z.B. Melem, Melam, Melon, oder um Umsetzungsprodukte von Melamin mit Polyphosphorsäure oder um Umsetzungsprodukte von Kondensationsprodukten des Melamins mit Polyphosphorsäure oder Gemische davon.

Als Komponente (C2) wird insbesondere Melaminpolyphosphat bevorzugt. Derartige Flammschutzmittel sind aus dem Stand der Technik bekannt. Hierzu wird auf die DE 103 46 326 verwiesen. Bevorzugt wird als Komponente (C1) ein Phosphinsäuresalz der allgemeinen Formel I und/oder Formel (II) und/oder deren Polymere

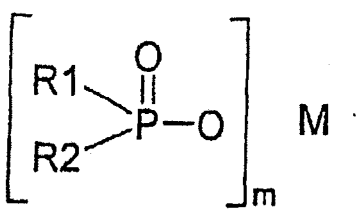

(I)

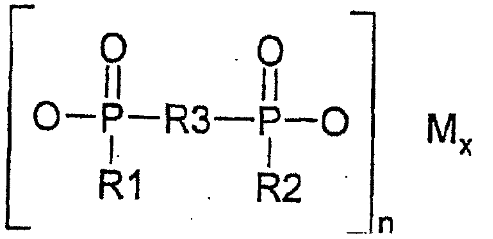

(II)

worin

| | |
|---|---|
| R1, R2 | gleich oder verschieden sind und bevorzugt C1-C8-Alkyl, linear oder verzweigt und/oder Aryl sind; |
| R3 | C1-C10-Alkylen, linear oder verzweigt, C6-C10-Arylen, -Alkylarylen oder Arylalkylen sind; |
| M | ein Metallion aus der 2. oder 3. Haupt- oder Nebengruppe des Periodensystems ist; und |
| m | 2 oder 3; |
| n | 1 oder 3; |
| x | 1 oder 2 |

bedeuten.

Als Metallion M werden bevorzugt Al, Ca, Ba und Zn verwendet.

In Kombination mit den Flammschutzkomponenten (C1) und (C2) können gegebenenfalls zusätzlich 0.5 bis 5 Gew.-%, bezogen auf die Summe (C1) und (C2), an sauerstoff-, stickstoff- oder schwefelhaltigen Metallverbindungen als Stabilisatoren (Komponente (C3)) zugegeben werden. Dabei bevorzugte Metalle sind Aluminium, Calcium, Magnesium und Zink. Geeignete Verbindungen sind ausgewählt aus der Gruppe der Oxide, Hydroxide, Carbonate, Silikate, Borate, Phosphate, Stannate sowie Kombinationen oder Mischungen dieser Verbindungen, wie z.B. Oxid-Hydroxide oder Oxid-Hydroxid-Carbonate. Beispiele sind Magnesiumoxid, Calciumoxid, Aluminiumoxid, Zinkoxid, Magnesiumhydroxid, Aluminiumhydroxid, Böhmit, Dihydrotalcit, Hydrocalumit, Calciumhydroxid, Zinnoxidhydrat, Zinkhydroxid, Zinkborat, Zinksulfid, Zinkphosphat, Zinkcarbonat, Calciumcarbonat, Calciumphosphat, Magnesiumcarbonat, basisches Zinksilikat, Zinkstannat, Calciumstearat, Zinkstearat, Magnesiumstearat, Bariumstearat, Kaliumpalmitat, Magnesiumbehenat.

Bei den erfindungsgemässen Polyamid-Formassen bzw. bei den daraus hergestellten Formkörpern ist somit weiterhin hervorzuheben, dass in Kombination zu den vorstehend beschriebenen ausgezeichneten Eigenschaften auch ein herausragender Flammschutz erreicht wird. Die Formmasse ist nach UL-Klassifizierung V0 bei 0,8 mm dicken Probenkörper (UL-94, Prüfung nach den Normen der Underwriters Laboratories (U.L.), vgl. www.ulstandards.com).

Die erfindungsgemässen Copolyamide erreichend die Brandschutzklassierung "V0" auch ohne Synergist-Zusatz (C2). Daher setzt sich die Flammschutzausrüstung bevorzugt ausschliesslich aus den Komponenten C1 und C3 zusammen.

Die Formmassen können Stabilisatoren, Verarbeitungshilfsmittel und Schlagzähmodifikatoren sowie weitere Additive enthalten.

Die erfindungsgemäßen Formmassen können aber auch weitere Zusatzstoffe (D), wie z. B. aus der Gruppe der anorganischen Stabilisatoren, organischen Stabilisatoren, Gleitmittel, Farbstoffe, Nukleierungsmittel, metallischen Pigmente, Metallflitter, metallbeschichtete Partikel, Schlagzähmodifikatoren, Antistatika, Leitfähigkeitsadditive, Entformungsmittel, optischen Aufheller, natürlichen Schichtsilikate, synthetischen Schichtsilikate oder Gemische der genannten Zusatzstoffe enthalten. Als Antistatika können in den erfindungsgemäßen Formmassen z. B. Ruß und/oder Kohlenstoffnanoröhrchen eingesetzt werden. Die Verwendung von Russ kann aber auch der Verbesserung der Schwarzfärbung der Formmasse dienen.

Als Schichtsilikate können in den erfindungsgemäßen Formmassen, z.B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt, aber auch unbehandelt sein.

Als Stabilisatoren bzw. Alterungsschutzmittel können in den erfindungsgemäßen Formmassen, z.B. Antioxidantien, Lichtschutzmittel, UV-Stabilisatoren, UV-Absorber oder UV-Blocker eingesetzt werden.

Die erfindungsgemässen Polyamide können auf üblichen Polykondensationsanlagen über die Prozessfolge Vorkondensat und Nachkondensation hergestellt werden. Für die Polykondensation werden zur Regelung der Viskosität bevorzugt Kettenregler eingesetzt. Als Kettenregler eignen sich Monoamine oder Monosäuren wie Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)propylamin, Methylcyclohexylainin, Dimethylcyclohexylamin, Benzylamin, 2-Phenylethylamin, u.a. Zusätzlich kann die Viskosität durch den Einsatz eines Diamin- oder Disäureüberschusses eingestellt werden.

Damit die Salzlösungen bei den Lösertemperaturen von 180 bis 230°C homogen und klar sind, werden zu den Monomeren üblicherweise 20 bis 30% Wasser zugesetzt. Zur Verhinderung übermässigen Schäumens beim Entspannen und Entgasen oder bei der Schmelzenachkondensation im Extruder wird den Ansätzen vorzugsweise ein Antischaummittel zugesetzt. Als Antischaummittel eignen sich wässrige Silikonemulsionen, Polydimethylsiloxan auf einem festen Träger, wie z.B. Zeolith, wasserfreies, hochmolekulares Polysiloxan oder Siloxane in organischen, wasserlöslichen Lösungsmitteln in einer Menge von 0.01 bis 0.5 Gewichts-%.

Als Polykondensationskatalysatoren werden den Monomermischungen vorzugsweise 0.005 bis 1.5 Gewichts-% Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie z.B. Na, K, Mg, Ca, Zn oder Al und/oder deren Ester wie z.B. Triphenylphosphat, Triphenylphosphit oder Tris-(nonylphenyl)-phosphit zugesetzt. Bevorzugt sind hypophosphorige Säure und Natriumhydrogenhypophosphit Monohydrat in einer Menge von 100 bis 500 ppm Phosphor bezogen auf das Copolyamid.

Wie oben erwähnt ist es so, dass z.B. bei Konnektoren der kritischen Dicke und Metalleinlegern, die die Wärme nach innen führen, beim Löten Blasen entstehen können. Besonders kritisch sind dabei insbesondere offenbar häufig Dicken zwischen 1 und 2 mm, die schon bei vergleichsweise tieferen Temperaturen beginnen Blasen zu bilden. Dünnere Wandstärken bilden weniger Blasen, weil sich hier keine kritische Wassermenge sammeln kann, die dazu fähig ist, eine Blase zu bilden, und weil das Wasser auf Grund der kurzen Diffusionswege beim Aufheizen gut verdunsten kann. Dickere Wandstärken sind ebenfalls weniger kritisch, weil sich dickere Prüfstäbe in der kurzen Heizzeit nicht vollständig erwärmen können. Vorzugsweise findet also das vorgeschlagene Material bei Formkörpern mit einer Wandstärke im Bereich von

0.5 - 3 mm, insbesondere von 1-2 mm Anwendung, wobei diese Wandstärke wenigstens in den beim Löten vom Wärmeübertrag betroffenen und zur Blasenbildung neigenden Bereichen vorliegt.

Zudem betrifft die Erfindung Verwendungen von Formkörpern welche wenigstens teilweise aus derartigen Polyamid-Formmassen bestehen. Solche Verwendungen sind beispielsweise Teile von Leiterplatten, Gehäusen, Folien, Leitungen, Schaltern, Verteilern, Relais, Widerstände, Kondensatoren, Spulen, Lampen, Dioden, LEDs, Transistoren, Konnektoren, Regler, Speicher und Sensoren. Weitere Ausführungsformen sind in den abhängigen Ansprüchen angegeben.

KURZE BESCHREIBUNG DER ZEICHNUNGEN

Bevorzugte Ausführungsformen der Erfindung werden im Folgenden u.a. anhand der Zeichnung beschrieben, die lediglich zur Erläuterung dient und nicht einschränkend auszulegen ist. In der Zeichnung zeigt Fig. 1 die Oberflächentemperatur eines 1.6 mm dicken UL94 Brandstabs bei den Bedingungen der Prüfung 2 (vgl. Tabelle 4).

BESCHREIBUNG BEVORZUGTER AUSFÜHRUNGSFORMEN

Die Erfindung soll nachfolgend unter Verwendung von spezifischen Ausführungsbeispielen beschrieben und mit den weniger leistungsfähigen Systemen nach dem Stand der Technik verglichen werden. Die in der Folge angegebenen Ausführungsbeispiele dienen zur Stützung der Erfindung und zum Nachweis der Unterschiede zum Stand der Technik, sie sollen aber nicht zur Einschränkung des allgemeinen Gegenstandes der Erfindung, wie er in den Patentansprüchen definiert ist, hinzugezogen werden.

Vergleichsbeispiele V1 bis V6:

Die Herstellung der Polyamide erfolgt über ein Vorkondensat und anschliessende Nachkondensation. Die Rezepturkomponenten gemäss Tabelle 1 werden zusammen mit Katalysator, Regler und Wasser in einen 20 1-Autoklaven gegeben, innerhalb von 50 bis 80 Minuten auf eine Produkttemperatur von 260°C aufgeheizt, für eine Stunde auf einem Druck von 32 bar gehalten und anschliessend über eine Düse ausgetragen. Das Vorkondensat wird 24 Stunden bei 120°C und einem Vakuum von 30 mbar getrocknet.

Das so erhaltene Polyamid-Vorkondensat wird in einem Zweiwellenextruder der Firma Werner und Pfleiderer mit einem Schneckendurchmesser von 25 mm bei vorgegebenen Prozessparametern (Zylindertemperatur: 340°C, Schneckendrehzahl: 150 Upm, Durchsatz: 6 kg/h) nachkondensiert. Die Schmelze wird in Zone 10 durch einen Stickstoffstrom entgast. Das Produkt wird als Strang aus einer Düse mit 3 mm Durchmesser abgezogen und granuliert. Das Granulat wird 24 Stunden bei 100°C im Vakuum von 30 mbar getrocknet. Die Polyamide werden mit einer Spritzgussmaschine Arburg Allrounder 320-210-750 zu ISO-Prüfkörper bei definierten Zylindertemperaturen der Zonen 1 bis 4 und einer definierten Werkzeugtemperatur verspritzt.

Die Vergleichsbeispiele V1 - V3 sind reines Copolyamid, das heißt ohne Füll- und Verstärkungsmittel, Flammschutzmittel und im wesentlichen ohne Additive, die Vergleichsbeispiele V4-V6 verwenden die Copolyamide der Vergleichsbeispiele V1-V3, wobei nun aber die in der Tab. 3 angegebenen Mengen Füll- und Verstärkungsmittel, Flammschutzmittel und Additive zugefügt sind.

Tabelle 1: Vergleichsbeispiele V1 gemäss US 4,607,073, V2 gemäss JP 2928325 und V3 gemäss EP 1 988 113.

| | Einheit | V1 | V2 | V3 |
|---|---|---|---|---|
| Zusammensetzung | | | | |
| 1.6-Hexandiamin | Gew.-Teile | 41.64 | 43.00 | 6.49 |
| 1,10-Decandiamin | Gew.-Teile | | | 44.38 |
| Terephthalsäure | Gew.-Teile | 40.86 | 33.15 | 49.13 |
| Isophthalsäure | Gew.-Teile | 17.51 | | |
| Adipinsäure | Gew.-Teile | | 23.85 | |
| Spritzgussbedingungen | | | | |
| Zylindertemperatur Zone 1 | °C | 325 | 315 | 315 |
| Zylindertemperatur Zone 2 | °C | 330 | 320 | 320 |
| Zylindertemperatur Zone 3 | °C | 335 | 325 | 325 |

(fortgesetzt)

| Spritzgussbedingungen | | | | |
|---|---|---|---|---|
| Zylindertemperatur Zone 4 | °C | 340 | 330 | 330 |
| Werkzeugtemperatur | °C | 130 | 120 | 130 |
| Eigenschaften | | | | |
| Lösungsviskosität | | 1.58 | 1.67 | 1.62 |
| Schmelzpunkt | °C | 325 | 310 | 295 |
| S chmelzenthalpie | J/g | 45 | 60 | 50 |
| Glasübergangstemp. | °C | 135 | 94 | 115 |
| Wasseraufnahme | % | 5.2 | 6.2 | 2.6 |
| Lötbarkeit | % | 78 | 67 | 83 |
| JEDEC SML 1 | | ja | nein | ja |

Beispiele B1 bis B13:

Die Herstellung der Polyamide nach der Erfindung wird analog zur Herstellung der Polyamide gemäß Vergleichsbeispiel V3 durchgeführt. Die Rezepturkomponenten gemäss Tabelle 2 werden zusammen mit Katalysator, Regler und Wasser eingesetzt.

Die Beispiele B1 - B8 sind das reine Copolyamid der Komponente (A), das heißt ohne Füll- und Verstärkungsmittel, Flammschutzmittel und im wesentlichen ohne Additive, in den Proportionen gemäß Tab. 2, die Beispiele B9-B13 verwenden die Copolyamide der Beispiele B1 respektive B5 wie in Tab. 3 angegeben, wobei nun aber die in der Tab. 3 angegebenen Mengen Füll- und Verstärkungsmittel, Flammschutzmittel und Additive zugefügt sind.

Tabelle 2: Zusammensetzung und Eigenschaften der Rohpolyamide der Beispiele B1 bis B8. Spritzgussbedingungen wie bei Vergleichsbeispiel V3.

| | Einheit | B1 | B2 | B3 | B4 | B5 | B6 | B7 | B8 |
|---|---|---|---|---|---|---|---|---|---|
| 1,6-Hexandiamin | Gew.-Teile | 31.99 | 31.57 | 30.31 | 29.50 | 29.66 | 29.50 | 27.42 | 25.34 |
| 1,10-Decandiamin | Gew.-Teile | 12.20 | 12.71 | 14.26 | 15.27 | 15.35 | 15.27 | 17.83 | 20.40 |
| Terephthalsäure | Gew.-Teile | 44.37 | 46.19 | 46.83 | 47.11 | 47.25 | 48.11 | 47.58 | 49.49 |
| Isophthalsäure | Gew.-Teile | 11.44 | 9.53 | 8.59 | 8.12 | 7.48 | 7.13 | 7.17 | 4.78 |
| Decandiamin-Anteil | Gew.-% | 27.6 | 28.7 | 32.0 | 34.1 | 34.1 | 34.1 | 39.4 | 44.6 |
| IPS-Anteil | Gew.-% | 20.5 | 17.1 | 15.5 | 14.7 | 13.6 | 12.9 | 13.1 | 8.8 |
| Lösungsviskosität | | 1.61 | 1.51 | 1.69 | 1.71 | 1.56 | 1.53 | 1.70 | 1.73 |
| Schmelzpunkt | °C | 311 | 322 | 315 | 313 | 318 | 321 | 309 | 309 |
| Schmelzenthalpie | J/g | 47 | 57 | 51 | 51 | 56 | 58 | 47 | 49 |
| Glasübergangstemp. | °C | 129 | 128 | 130 | 129 | 128 | 128 | 129 | 127 |
| Wasseraufnahme | Gew.-% | 4.2 | 3.8 | 3.7 | 3.6 | 3.6 | 3.6 | 3.6 | 3.5 |
| Lötbarkeit | % | 85 | 88 | 90 | 97 | 99 | 97 | 94 | 97 |
| JEDEC SML1 | | ja | ja | ja | ja | ja | ja | ja | ja |

Tabelle 3: Zusammensetzung und Eigenschaften der Compounds der Vergleichsbeispiele V4 - V6 und der Beispiele B9 bis B13 Spritzgussbedingungen für Vergleichsbeispiel V4 bis V6 wie bei V1 bis V3 und für die Beispiele B9 bis B13 wie bei V3.

| | Einheit | V4 | V5 | V6 | B9 | B10 | B11 | B12 | B13 |
|---|---|---|---|---|---|---|---|---|---|
| Polyamid Typ aus | - | V1 | V2 | V3 | B1 | B5 | B5 | B5 | B5 |
| Polyamid | Gew.-% | 55.2 | 57.2 | 55.2 | 55.75 | 55.75 | 67.8 | 86.9 | 83.9 |
| Alugel 34TH | Gew.-% | 0.3 | 0.5 | 0.3 | 0.15 | 0.15 | | | |
| Bariumstearat | Gew.-% | | | | 0.6 | 0.6 | 0.5 | 0.5 | 0.5 |
| Irganox 1098 | Gew.-% | 0.5 | 0.3 | 0.5 | 0.5 | 0.5 | 0.5 | 0.5 | 0.5 |
| Melapur 200/70 | Gew.-% | 0.5 | | 0.5 | | | | | |
| Zinkcarbonat | Gew.-% | 0.5 | | 0.5 | | | | | |
| Zinkoxid AC | | | | | | | | 0.1 | 0.1 |
| Exolit OP1230 | Gew.-% | 12.0 | 12.0 | 12.0 | 12.0 | 12.0 | | 12.0 | 15.0 |
| Schwarz-Masterbatch | Gew.-% | 1.0 | | 1.0 | 1.0 | 1.0 | 1.2 | | |
| GF Vetrotex 995 EC10-4.5 | Gew.-% | 30.0 | 30.0 | 30.0 | 30.0 | 30 | 30 | | |
| Lösungsviskosität | | 1.558 | 1.562 | 1.520 | 1.495 | 1.497 | 1.480 | 1.589 | 1.554 |
| Schmelzpunkt | °C | 325 | 310 | 295 | 309 | 318 | 318 | 318 | 318 |
| Schmelzenthalpie | J/g | 26 | 30 | 30 | 28 | 27 | 36 | 48 | 46 |
| Glasübergangstemp. | °C | 132 | 98 | 115 | 124 | 125 | 127 | 125 | 125 |
| Wasseraufnahme | Gew.-% | 2.5 | 3.5 | 1.9 | 2.3 | 2.3 | - | - | - |
| Lötbarkeit | % | 50 | 10 | 59 | 82 | 84 | 78 | 77 | 84 |
| JEDEC SML1 | | nein | nein | ja | ja | ja | ja | ja | ja |
| Zug-E-Modul | MPa | 10800 | 10900 | 9600 | 11500 | 11600 | 10900 | 4000 | 4100 |
| Zugfestigkeit | MPa | 121 | 124 | 128 | 150 | 152 | 143 | 79 | 72 |
| Reissdehnung | % | 1.6 | 1.5 | 1.9 | 2.0 | 1.9 | 1.8 | 3.0 | 2.6 |
| Schlagzähigkeit | $kJ/m^2$ | 43 | 28 | 47 | 50 | 50 | 35 | 48 | 42 |
| Kerbschlagzähigkeit | $kJ/m^2$ | 5.3 | 7.1 | 7.6 | 6.6 | 9.6 | 8.5 | 4.6 | 4.2 |
| UL94 | | V0 | V0 | V0 | V0 | V0 | HB | V2 | V0 |

Melapur®200/70: Melaminpolyphosphat (Ciba Spez. GmbH), Flammschutzmittel, CAS-Nr: 218768-84-4
Exolit®GP1230: phosphororganisches Salz (Clariant Produkte GmbH), Flammschutzmittel.
Alugel 34TH: Aluminiumstearat-Additiv von Baerlocher
Irganox 1098: sterisch gehindertes phenolisches Antioxidans von Ciba Spez. GmbH
Vetrotex 995: Schnittglasfasern mit einer Länge von 4.5 mm und einem Durchmesser von 10 µm (kreisförmiger Querschnitt) von Owens Corning Fiberglas

Anhand der obigen Tabellen 1-2 kann erkannt werden, dass bei Betrachtung allein der Komponente (A) die Vergleichsysteme V1 sowie V2 sowohl hinsichtlich Wasseraufnahme als auch hinsichtlich Lötbarkeit den vorgeschlagenen Systemen weit unterlegen sind. Die Wasseraufnahme ist wesentlich höher bei diesen Systemen des Standes der Technik und die Lötbarkeit wesentlich niedriger. Beim Vergleichsystem V3 ist zwar die Wasseraufnahme niedrig, wie eingangs erläutert ist hier aber die Lötbarkeit für viele praktische Anwendungen ungenügend.

Auch bei den Polyamid-Formmassen gemäß Tab. 3 mit Füll- und Verstärkungsmitteln, Flammschutzmittel respektive Additiven zeigt sich, dass die erfindungsgemäßen Systeme in jedem Fall einen besseren Kompromiss aus möglichst niedriger Wasseraufnahme und möglichst hoher Lötbarkeit darstellen wenn verglichen mit den Vergleichsbeispielen V4-V6.

Die Messungen wurden nach folgenden Normen und an folgenden Prüfkörpern durchgeführt.

Thermisches Verhalten:

Schmelzpunkt, Schmelzenthalpie und Glasübergangstemperatur (Tg):

ISO-Norm 11357-11-2

Granulat

Die Differential Scanning Calorimetry (DSC) wurde mit Aufheizrate von 20 °C/min durchgeführt. Für die Glasumwandlungstemperatur (Tg) wird die Temperatur für den Onset angegeben.

Relative Viskosität:

DIN EN ISO 307, in 0,5 Gew.-%-iger m-Kresollösung, Temperatur 20 °C,

Granulat

Zug-E-Modul, Zugfestigkeit und Reissfestigkeit:

ISO 527 mit einer Zuggeschwindigkeit von 50 mm/min (unverstärkte Varianten) oder einer Zuggeschwindigkeit von 5 mm/min (verstärkte Varianten)
ISO-Zugstab, Norm: ISO/CD 3167, Typ A1, 170 x 20/10 x 4 mm, Temperatur 23 °C

Schlagzähigkeit nach Charpy:

ISO 179/*eU

ISO-Prüfstab, Norm: ISO/CD 3167, Typ B1, 80 x 10 x 4 mm, Temperatur 23 °C * 1 = nicht instrumentiert, 2 = instrumentiert

Kerbschlagzähigkeit nach Charpy:

ISO 179/*eA
ISO-Prüfstab, Norm: ISO/CD 3167, Typ B1, 80 x 10 x 4 mm, Temperatur 23 °C * 1 = nicht instrumentiert, 2 = instrumentiert

Wasseraufnahme:

Gewichtsänderung von Zugstäben gemäss ISO 527 in Wasser bei 95°C für eine Dauer von 336 Stunden

Lötbarkeit:

Es werden UL94 Brandstäbe der Dicken 0.8, 1.6 und 3.2 mm gespritzt. Diese Stäbe werden bei 85°C und 85% relativer Feuchte für 168 Stunden in einem Klimaschrank Allen 600 der Firma Angelantoni Industrie s.p.a. (IT) gelagert wie es in dem Joint Industry Standard IPC/JEDEC J-STD-020D.1 für den Feuchtigkeitssensitivitätslevel 1 (Moisture Sensitivity Level, SML 1) beschrieben ist. Danach werden jeweils 5 Prüfstäbe der drei verschiedenen Dicken auf eine Platine gelegt (einseitige Temperaturbelastung) und mit einer Bandgeschwindigkeit von 200 mm/min durch ein Reflow Lötsystem RO300FC der Firma Essemtec AG (CH) transportiert. Die Heizzonen werden auf die in der Tabelle 4 aufgeführten Temperaturen eingestellt. Die Prüfung 2 (einseitig) ergibt für einen 1.6 mm dicken UL94 Brandstab das vorgeschriebene Lötprofil mit einer Peaktemperatur von 260°C. Die Oberflächentemperatur eines 1.6 mm dicken UL94 Brandstabes ist 54 sec über 255°C und 22 sec über 260°C, wie Abbildung 1 zeigt. Anschliessend werden jeweils 5 Prüfstäbe der drei verschiedenen Dicken ohne Platine direkt auf das Drahtnetz gelegt und damit einer zweiseitigen Temperaturbelastung ausgesetzt. Zur Berechnung der Lötbarkeit wird die Anzahl der Prüfstäbe ohne Blister durch die gesamte Anzahl der geprüften Prüfstäbe (= 90) geteilt und mit 100% multipliziert.

Tabelle 4: Temperatureinstellungen der Heizzonen der Reflow Lötsystems.

| | Zone 1 [°C] | Zone 2 [°C] | Zone 3 [°C] |
|---|---|---|---|
| Prüfung 1 (einseitig) | 155 | 235 | 280 |
| Prüfung 2 (einseitig) | 155 | 235 | 285 |
| Prüfung 3 (einseitig) | 155 | 235 | 295 |
| Prüfung 4 (zweiseitig) | 140 | 230 | 265 |
| Prüfung 5 (zweiseitig) | 140 | 230 | 275 |
| Prüfung 6 (zweiseitig) | 140 | 230 | 285 |

JEDEC SML 1:

1.6 mm dicke UL94 Brandstäbe erreichen das Feuchtigkeitssensitivitätslevel 1 (Moisture Sensitivity Level, SML 1). Das heisst nach der Konditionierung bei 85°C und 85% relativer Feuchte für 168 Stunden sind keine Blasen erkennbar bei den Bedingungen der Prüfung 2 (einseitig) gemäss Tabelle 4 und dem Temperaturprofil gemäss Figur 1.

**Patentansprüche**

**1.** Polyamid-Formmasse mit folgender Zusammensetzung:

(A) 30-100 Gew.-% eines teilaromatischen, teilkristallinen Copolyamids aufgebaut aus

100 Gew.-% Disäureanteil zusammengesetzt aus:

72.0-98.3 Gew.-% Terephthalsäure (TPS) und/oder Naphthalindicarbonsäure;
28.0-1.7 Gew.-% Isophthalsäure (IPS)

und 100 Gew.-% Diaminanteil zusammengesetzt aus:

51.0-80.0 Gew.-% 1,6-Hexandiamin (HMDA);
20.0-49.0 Gew.-% C9-C12 Diamin ausgewählt aus der Gruppe: 1,9-Nonandiamin, 1,10-Decandiamin, 1,11-Undecandiamin, 1,12-Dodecandiamin, oder eine Mischung davon;

(B) 0-70 Gew.-% Füll- und Verstärkungsmittel;
(C) 0-25 Gew.-% Flammschutzmittel;
(D) 0-5 Gew.-% Additive;

wobei sich die Komponenten (A)-(D) auf 100 Gew.-% ergänzen.

2. Polyamid-Formmasse nach Anspruch 1, wobei es sich beim C9-C12 Diamin um 1,10-Decandiamin und/oder 1,12-Dodecandiamin handelt, insbesondere bevorzugt um 1,10-Decandiamin allein.

3. Polyamid-Formmasse nach einem der vorhergehenden Ansprüche, **dadurch gekennzeichnet, dass** der Diaminanteil der Komponente (A) zusammengesetzt ist aus

   55.0-75.0 Gew.-% 1,6-Hexandiamin (HMDA);
   25.0-45.0 Gew.-% C9-C12 Diamin ausgewählt aus der Gruppe: 1,9-Nonandiamin, 1,10-Decandiamin, 1,11-Undecandiamin, 1,12-Dodecandiamin, oder eine Mischung davon.

4. Polyamid-Formmasse nach einem der vorhergehenden Ansprüche, **dadurch gekennzeichnet, dass** der Diaminanteil der Komponente (A) zusammengesetzt ist aus

   55.0-70.0 Gew.-% 1,6-Hexandiamin (HMDA);
   30.0-45.0 Gew.-% C9-C12 Diamin ausgewählt aus der Gruppe: 1,9-Nonandiamin, 1,10-Decandiamin, 1,11-Undecandiamin, 1,12-Dodecandiamin, oder eine Mischung davon.

5. Polyamid-Formmasse nach einem der vorhergehenden Ansprüche, wobei der Disäureanteil der Komponente (A) zusammengesetzt ist aus 72.0-98.3 Gew.-% Terephthalsäure (TPS) und/oder Naphthalindicarbonsäure und einem Isophthalsäure (IPS) Gehalt in einem Gew.-%-Bereich ermittelt als Funktion des Gehalts an C9-C12 Diamin, ausgewählt aus der Gruppe: 1,9-Nonandiamin, 1,10-Decandiamin, 1,11-Undecandiamin, 1,12-Dodecandiamin, oder eine Mischung davon, in Prozenten des Diaminanteils nach der Formel

$$\text{IPS (Gew.-\%)} = (39\text{-}0.7\text{*C9-C12 Diamin})$$

   mit einer Bereichbreite von +/- 5 Gew.-%, vorzugsweise einer Bereichbreite von +/- 3 Gew.-%, insbesondere vorzugsweise einer Bereichbreite von +/- 2 Gew.-%.

6. Polyamid-Formmasse nach einem der vorhergehenden Ansprüche, wobei der Anteil an Komponente (B) im Bereich von 20-65 Gew.-% liegt.

7. Polyamid-Formmasse nach einem der vorhergehenden Ansprüche, wobei das teilaromatische, teilkristalline Copolyamid der Komponente (A) eine Lösungsviskosität, gemessen in m-Kresol bei 0.5 Gew.-% und einer Temperatur von 20 °C von höchstens 2.0, bevorzugt von 1.9, insbesondere bevorzugt von 1.8 aufweist.

8. Polyamid-Formmasse nach einem der vorhergehenden Ansprüche, wobei das teilaromatische, teilkristalline Copolyamid der Komponente (A) eine Glasübergangstemperatur im Bereich von 110-140 °C, bevorzugt im Bereich von 115-135 °C, und insbesondere bevorzugt im Bereich von 120-130 °C aufweist, und/oder wobei das teilaromatische, teilkristalline Copolyamid der Komponente (A) einen Schmelzpunkt im Bereich von 300-330 °C, bevorzugt im Bereich von 305-325 °C, insbesondere bevorzugt im Bereich von 310-325 °C aufweist.

9. Polyamid-Formmasse nach einem der vorhergehenden Ansprüche, wobei das teilaromatische, teilkristalline Copolyamid der Komponente (A) eine Schmelzenthalpie im Bereich von 30-60 J/g, bevorzugt im Bereich von 35-60 J/g, insbesondere bevorzugt im Bereich von 40-60 J/g aufweist.

10. Polyamid-Formmasse nach einem der vorhergehenden Ansprüche, wobei die Komponente (A) und/oder die ganze Polyamid-Formmasse eine Wasseraufnahme von weniger als 5 Gew.-%, bevorzugt von weniger als 4 Gew.-% aufweist, vorzugsweise nach 336h in Wasser bei einer Temperatur von 95 °C.

11. Polyamid-Formmasse nach einem der vorhergehenden Ansprüche, wobei es sich bei den Füll- und Verstärkungsmitteln der Komponente (B) um Fasern, insbesondere um Glas- und/oder Kohlenstofffasern handelt, wobei insbesondere bevorzugt Kurzfasern, bevorzugt mit einer Länge im Bereich von 2-50 mm und/oder Endlosfasern eingesetzt werden, und wobei insbesondere Fasern mit kreisförmiger und/oder nicht-kreisförmiger Querschnittsfläche eingesetzt werden, wobei im letzteren Fall bevorzugtermassen das Abmessungsverhältnis von der Hauptquerschnittsachse zur Nebenquerschnittsachse >2, vorzugsweise im Bereich von 2-8, insbesondere bevorzugt im Bereich von 2-5 liegt.

**12.** Polyamid-Formmasse nach einem der vorhergehenden Ansprüche, wobei es sich bei den Füll- und Verstärkungsmitteln der Komponente (B) um teilchenförmige Füllstoffe handelt, oder eine Mischung aus Fasern und teilchenförmigen Füllstoffen handelt, wobei als teilchenförmige Füllstoffe vorzugsweise mineralische Füllstoffe auf Basis von Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenem Glas, dauerhaft magnetische bzw. magnetisierbare Metallverbindungen und/oder Legierungen respektive Mischungen eingesetzt sind.

**13.** Polyamid-Formmasse nach einem der vorhergehenden Ansprüche, **dadurch gekennzeichnet, dass** der Anteil an Komponente (C) im Bereich von 8-25 Gew.-% liegt, vorzugsweise im Bereich von 10-22 Gew.-%, insbesondere bevorzugtermassen im Bereich von 10-18 Gew.-% liegt, wobei sich bevorzugtermassen die Komponente (C) zusammensetzt aus 60-100 Gew.-%, vorzugsweise 70-98 Gew.-%, insbesondere vorzugsweise 80-96 Gew.-% eines Phosphinsäuresalzes und/oder Diphosphinsäuresalzes und 0-40 Gew.-%, respektive 2-30 Gew.-%, respektive 4-20 Gew.-% eines stickstoffhaltigen Synergisten und/oder eines Stickstoff und/oder Phosphor enthaltenden Flammschutzmittels, wobei Letztere vorzugsweise ausgewählt sind aus Melamin oder Kondensationsprodukten des Melamins, wie insbesondere Melem, Melam, Melon, oder Umsetzungsprodukte von Melamin mit Polyphosphorsäure oder Umsetzungsprodukte von Kondensationsprodukten des Melamins mit Polyphosphorsäure oder Gemische davon, insbesondere Melaminpolyphosphat.

**14.** Polyamid-Formmasse nach einem der vorhergehenden Ansprüche, **dadurch gekennzeichnet, dass** als Additive der Komponente (D) Stabilisatoren, Verarbeitungshilfsmittel, anorganische Stabilisatoren, organische Stabilisatoren, Gleitmittel, Farbstoffe, Nukleierungsmittel, metallische Pigmente, Metallflitter, metallbeschichtete Partikel, Schlagzähmodifikatoren, Antistatika, Leitfähigkeitsadditive, Entformungsmittel, optische Aufheller, natürliche Schichtsilikate, synthetische Schichtsilikate oder Gemische der genannten Zusatzstoffe enthalten sind, wobei vorzugsweise als Antistatika Ruß und/oder Kohlenstoffnanoröhrchen eingesetzt werden.

**15.** Formkörper hergestellt unter Verwendung einer Polyamid-Formmasse nach einem der vorhergehenden Ansprüche, insbesondere bevorzugt in Form eines elektrischen oder elektronischen Bauteils, einer Leiterplatte, eines Teils einer Leiterplatte, eines Gehäusebestandteils, einer Folie, einer Leitung, insbesondere in Form eines Schalters, eines Verteilers, eines Relais, eines Widerstandes, eines Kondensators, einer Spule, einer Lampe, einer Dioden, einer LED, eines Transistors, eines Konnektors, eines Reglers, eines Speichers und/oder eines Sensors.

## Claims

**1.** Polyamide moulding composition having the following composition:

(A) 30-100% by weight of a partially aromatic, partially crystalline copolyamide made up of

100% by weight of diacid fraction composed of:

72.0-98.3% by weight of terephthalic acid (TPA) and/or naphthalenedicarboxylic acid;
28.0-1.7% by weight of isophthalic acid (IPA)

and 100% by weight of diamine fraction composed of:

51.0-80.0% by weight of 1,6-hexanediamine (HMDA);
20.0-49.0% by weight of aliphatic, unbranched C9-C12-diamine, selected from the group consisting of: 1, 9-nonandiamine, 1,10 decandiamine, 1.11. undecandiamine, 1,12-dodecandiamine or a mixture thereof;

(B) 0-70% by weight of fillers and reinforcing materials;
(C) 0-25% by weight of flame retardants;
(D) 0-5% by weight of additives;

where the components (A)-(D) add up to 100% by weight.

**2.** Polyamide moulding composition according to Claim 1, wherein the aliphatic, unbranched C9-C12-diamine is 1,10-decanediamine and/or 1,12-dodecanediamine, and 1,10-decanediamine alone being preferred.

3. Polyamide moulding composition according to either of the preceding claims, **characterized in that** the diamine fraction of the component (A) is composed of

   55.0-75.0% by weight of 1,6-hexanediamine (HMDA);
   25.0-45.0% by weight of aliphatic, unbranched C9-C12-diamine, selected from the group consisting of: 1, 9-nonandiamine, 1,10 decandiamine, 1.11. undecandiamine, 1,12-dodecandiamine or a mixture thereof.

4. Polyamide moulding composition according to any of the preceding claims, **characterized in that** the diamine fraction of the component (A) is composed of

   55.0-70.0% by weight of 1,6-hexanediamine (HMDA);
   30.0-45.0% by weight of aliphatic, unbranched C9-C12-diamine selected from the group consisting of: 1, 9-nonandiamine, 1,10 decandiamine, 1.11. undecandiamine, 1,12-dodecandiamine or a mixture thereof.

5. Polyamide moulding composition according to any of the preceding claims, wherein the diacid fraction of the component (A) is composed of 72.0-98.3% by weight of terephthalic acid (TPA) and/or naphthalenedicarboxylic acid and an isophthalic acid (IPA) content in a % by weight range determined as a function of the content of aliphatic, unbranched C9-C12-diamine selected from the group consisting of: 1, 9-nonandiamine, 1,10 decandiamine, 1.11. undecandiamine, 1,12-dodecandiamine or a mixture thereof in per cent of the diamine fraction according to the formula

$$\text{IPA (\% by weight)} = (39 - 0.7\text{*C9-C12-diamine})$$

   with a range of +/- 5% by weight, preferably a range of +/- 3% by weight, particularly preferably a range of +/- 2% by weight.

6. Polyamide moulding composition according to any of the preceding claims, wherein the proportion of component (B) is in the range 20-65% by weight.

7. Polyamide moulding composition according to any of the preceding claims, wherein the partially aromatic, partially crystalline copolyamide of the component (A) has a solution viscosity measured in m-cresol at 0.5% by weight and at a temperature of 20°C of not more than 2.0, preferably of 1.9, particularly preferably of 1.8.

8. Polyamide moulding composition according to any of the preceding claims, wherein the partially aromatic, partially crystalline copolyamide of the component (A) has a glass transition temperature in the range 110-140°C, preferably in the range 115-135°C and particularly preferably in the range 120-130°C, and/or the partially aromatic, partially crystalline copolyamide of the component (A) has a melting point in the range 300-330°C, preferably in the range 305-325°C, particularly preferably in the range 310-325°C.

9. Polyamide moulding composition according to any of the preceding claims, wherein the partially aromatic, partially crystalline copolyamide of the component (A) has an enthalpy of fusion in the range 30-60 J/g, preferably in the range 35-60 J/g, particularly preferably in the range 40-60 J/g.

10. Polyamide moulding composition according to any of the preceding claims, wherein the component (A) and/or the entire polyamide moulding composition has a water absorption of less than 5% by weight, preferably less than 4% by weight, preferably after 336 hours in water at temperature of 95°C.

11. Polyamide moulding composition according to any of the preceding claims, wherein the fillers and reinforcing materials of the component (B) are fibres, in particular glass fibres and/or carbon fibres, with particular preference being given to using short fibres, preferably having a length in the range 2-50 mm, and/or continuous fibres and in particular fibres having a circular and/or noncircular cross-sectional area, with in the latter case the length ratio of the main cross-sectional axis to the secondary cross-sectional axis preferably being > 2, preferably in the range 2-8, particularly preferably in the range 2-5.

**12.** Polyamide moulding composition according to any of the preceding claims, wherein the fillers and reinforcing materials of the component (B) are particulate fillers, or a mixture of fibres and particulate fillers, with preference being given to using mineral fillers based on talc, mica, silicate, quartz, titanium dioxide, wollastonite, kaolin, amorphous silicas, magnesium carbonate, magnesium hydroxide, chalk, lime, feldspar, barium sulphate, solid or hollow glass spheres or milled glass, permanently magnetic or magnetizable metal compounds and/or alloys or mixtures as particulate fillers.

**13.** Polyamide moulding composition according to any of the preceding claims, **characterized in that** the proportion of component (C) is in the range 8-25% by weight, preferably in the range 10-22% by weight, particularly preferably in the range 10-18% by weight, with the component (C) preferably being composed of 60-100% by weight, preferably 70-98% by weight, particularly preferably 80-96% by weight, of a phosphinic acid salt and/or diphosphinic acid salt and 0-40% by weight, or 2-30% by weight, or 4-20% by weight, of a nitrogen-containing synergist and/or a nitrogen- and/or phosphorus-containing flame retardant, with the latter preferably being selected from among melamine or condensation products of melamine, in particular melem, melam, melon, or reaction products of melamine with polyphosphoric acid or reaction products of condensation products of melamine with polyphosphoric acid or mixtures thereof, in particular melamine polyphosphate.

**14.** Polyamide moulding composition according to any of the preceding claims, **characterized in that** stabilizers, processing aids, inorganic stabilizers, organic stabilizers, lubricants, dyes, nucleating agents, metallic pigments, metal flakes, metal-coated particles, impact modifiers, antistatics, conductivity additives, mould release agents, optical brighteners, natural sheet silicates, synthetic sheet silicates or mixtures of the additives mentioned are present as additives of the component (D), with preference being given to using carbon black and/or carbon nanotubes as antistatics.

**15.** Moulding produced using a polyamide moulding composition according to any of the preceding claims, particularly preferably in the form of an electrical or electronic component, a printed circuit board, a part of a printed circuit board, a housing component, a film, a conduit, in particular in the form of a switch, a distributor, a relay, a resistance, a capacitor, a coil, a lamp, a diode, an LED, a transistor, a connector, a regulator, a storage and/or a sensor.

**Revendications**

**1.** Matériau de moulage polyamide ayant la composition suivante :

(A) 30 à 100 % en poids d'un copolyamide partiellement aromatique, partiellement cristallin, formé par :

100 % en poids d'une fraction diacide composée de :

72,0 à 98,3 % en poids d'acide téréphtalique (TPS) et/ou d'acide naphtaline-dicarboxylique ;
28,0 à 1,7 % en poids d'acide isophtalique (IPS) ;

et 100 % en poids d'une fraction diamine composée de :

51,0 à 80,0 % en poids de 1,6-hexane-diamine (HMDA) ;
20,0 à 49,0 % en poids d'une diamine en C9-C12 choisie dans le groupe constitué par : la 1,9-nonane-diamine, la 1,10-décane-diamine, la 1,11-undécane-diamine, la 1,12-dodécane-diamine ou un mélange de celles-ci ;

(B) 0 à 70 % en poids de charges et de matières renforçantes ;
(C) 0 à 25 % en poids d'agents ignifuges ;
(D) 0 à 5 % en poids d'additifs ;

la somme des composants (A) à (D) étant de 100 % en poids.

**2.** Matériau de moulage polyamide selon la revendication 1, dans lequel la diamine en C9-C12 est la 1,10-décane-diamine et/ou la 1,12-dodécane-diamine, de manière particulièrement préférée la 1,10-décane-diamine seule.

**3.** Matériau de moulage polyamide selon l'une quelconque des revendications précédentes, **caractérisé en ce que**

la fraction diamine du composant (A) est composée de :

55,0 à 75,0 % en poids de 1,6-hexane-diamine (HMDA) ;
25,0 à 45,0 % en poids d'une diamine en C9-C12 choisie dans le groupe constitué par : la 1,9-nonane-diamine, la 1,10-décane-diamine, la 1,11-undécane-diamine, la 1,12-dodécane-diamine ou un mélange de celles-ci.

4. Matériau de moulage polyamide selon l'une quelconque des revendications précédentes, **caractérisé en ce que** la fraction diamine du composant (A) est composée de :

55,0 à 70,0 % en poids de 1,6-hexane-diamine (HMDA) ;
30,0 à 45,0 % en poids d'une diamine en C9-C12 choisie dans le groupe constitué par : la 1,9-nonane-diamine, la 1,10-décane-diamine, la 1,11-undécane-diamine, la 1,12-dodécane-diamine ou un mélange de celles-ci.

5. Matériau de moulage polyamide selon l'une quelconque des revendications précédentes, la fraction diacide du composant (A) étant composée de :

72,0 à 98,3 % en poids d'acide téréphtalique (TPS) et/ou d'acide naphtaline-dicarboxylique, et
d'un acide isophtalique (IPS) en une teneur dans une plage de % en poids déterminée en fonction de la teneur en diamine C9-C12 choisie dans le groupe constitué par : la 1,9-nonane-diamine, la 1,10-décane-diamine, la 1,11-undécane-diamine, la 1,12-dodécane-diamine ou un mélange de celles-ci, en pourcentage de la fraction de diamine selon la formule :

$$\text{IPS (\% en poids)} = (39 - 0{,}7 * \text{diamine en C9-C12})$$

avec une largeur de plage de ± 5 % en poids, de préférence une largeur de plage de ± 3 % en poids, de manière particulièrement préférée une largeur de plage de ± 2 % en poids.

6. Matériau de moulage polyamide selon l'une quelconque des revendications précédentes, la proportion du composant (B) se situant dans la plage allant de 20 à 65 % en poids.

7. Matériau de moulage polyamide selon l'une quelconque des revendications précédentes, le copolyamide partiellement aromatique, partiellement cristallin du composant (A) présentant une viscosité en solution, mesurée dans le m-crésol à 0,5 % en poids et à une température de 20 °C, d'au plus 2,0, de préférence de 1,9, de manière particulièrement préférée de 1,8.

8. Matériau de moulage polyamide selon l'une quelconque des revendications précédentes, le copolyamide partiellement aromatique, partiellement cristallin du composant (A) présentant une température de transition vitreuse dans la plage allant de 110 à 140 °C, de préférence dans la plage allant de 115 à 135 °C et de manière particulièrement préférée dans la plage allant de 120 à 130 °C, et/ou le copolyamide partiellement aromatique, partiellement cristallin du composant (A) présentant un point de fusion dans la plage allant de 300 à 330 °C, de préférence dans la plage allant de 305 à 325 °C, de manière particulièrement préférée dans la plage allant de 310 à 325 °C.

9. Matériau de moulage polyamide selon l'une quelconque des revendications précédentes, le copolyamide partiellement aromatique, partiellement cristallin du composant (A) présentant une enthalpie de fusion dans la plage allant de 30 à 60 J/g, de préférence dans la plage allant de 35 à 60 J/g, de manière particulièrement préférée dans la plage allant de 40 à 60 J/g.

10. Matériau de moulage polyamide selon l'une quelconque des revendications précédentes, le composant (A) et/ou le matériau de moulage polyamide entier présentant une absorption d'eau de moins de 5 % en poids, de préférence de moins de 4 % en poids, de préférence après 336 h dans de l'eau à une température de 95 °C.

11. Matériau de moulage polyamide selon l'une quelconque des revendications précédentes, les charges et/ou matières renforçantes du composant (B) étant des fibres, notamment des fibres de verre et/ou de carbone, des fibres courtes, de préférence ayant une longueur dans la plage allant de 2 à 50 mm, et/ou des fibres sans fin étant utilisées de manière particulièrement préférée, et des fibres de surface de section transversale circulaire et/ou non circulaire étant notamment utilisées, dans le dernier cas, le rapport de dimensions entre l'axe principal de la section transversale

et l'axe secondaire de la section transversale étant de préférence > 2, de préférence dans la plage allant de 2 à 8, de manière particulièrement préférée dans la plage allant de 2 à 5.

**12.** Matériau de moulage polyamide selon l'une quelconque des revendications précédentes, les charges et matières renforçantes du composant (B) étant des charges particulaires, ou un mélange de fibres et de charges particulaires, des charges minérales à base de talc, mica, silicate, quartz, dioxyde de titane, wollastonite, kaolin, silices amorphes, carbonate de magnésium, hydroxyde de magnésium, craie, chaux, feldspath, sulfate de baryum, billes de verre pleines ou creuses ou verre broyé, des composés métalliques magnétiques de manière durable ou magnétisables et/ou des alliages ou des mélanges étant de préférence utilisés en tant que charges particulaires.

**13.** Matériau de moulage polyamide selon l'une quelconque des revendications précédentes, **caractérisé en ce que** la proportion du composant (C) se situe dans la plage allant de 8 à 25 % en poids, de préférence dans la plage allant de 10 à 22 % en poids, de manière particulièrement préférée dans la plage allant de 10 à 18 % en poids, le composant (C) étant de préférence composé par 60 à 100 % en poids, de préférence 70 à 98 % en poids, de manière particulièrement préférée 80 à 96 % en poids d'un sel de l'acide phosphinique et/ou d'un sel de l'acide diphosphinique, et de 0 à 40 % en poids ou 2 à 30 % en poids ou 4 à 20 % en poids d'un synergiste azoté et/ou d'un agent ignifuge contenant de l'azote et/ou du phosphore, ce dernier étant de préférence choisi parmi la mélamine ou les produits de condensation de mélamine, tels que notamment le mélem, le mélam, le mélon, ou les produits de réaction de mélamine avec de l'acide polyphosporique ou les produits de réaction de produits de condensation de mélamine avec de l'acide polyphosporique ou leurs mélanges, notamment le polyphosphate de mélamine.

**14.** Matériau de moulage polyamide selon l'une quelconque des revendications précédentes, **caractérisé en ce que** des stabilisateurs, des adjuvants d'usinage, des stabilisateurs inorganiques, des stabilisateurs organiques, des lubrifiants, des colorants, des agents de nucléation, des pigments métalliques, des paillettes métalliques, des particules revêtues de métaux, des modificateurs de la résistance aux impacts, des antistatiques, des additifs de conductivité, des agents démoulants, des azurants optiques, des phyllosilicates naturels, des phyllosilicates synthétiques ou des mélanges des additifs mentionnés sont contenus en tant qu'additifs du composant (D), du noir de carbone et/ou des nanotubes de carbone étant de préférence utilisés en tant qu'antistatiques.

**15.** Corps moulé fabriqué en utilisant un matériau de moulage polyamide selon l'une quelconque des revendications précédentes, de manière particulièrement préférée sous la forme d'un composant électrique ou électronique, d'un circuit imprimé, d'une partie d'un circuit imprimé, d'un constituant de boîtier, d'un film, d'un circuit, notamment sous la forme d'un commutateur, d'un distributeur, d'un relais, d'une résistance, d'un condensateur, d'une bobine, d'une lampe, d'une diode, d'une LED, d'un transistor, d'un connecteur, d'un régulateur, d'un accumulateur et/ou d'un capteur.

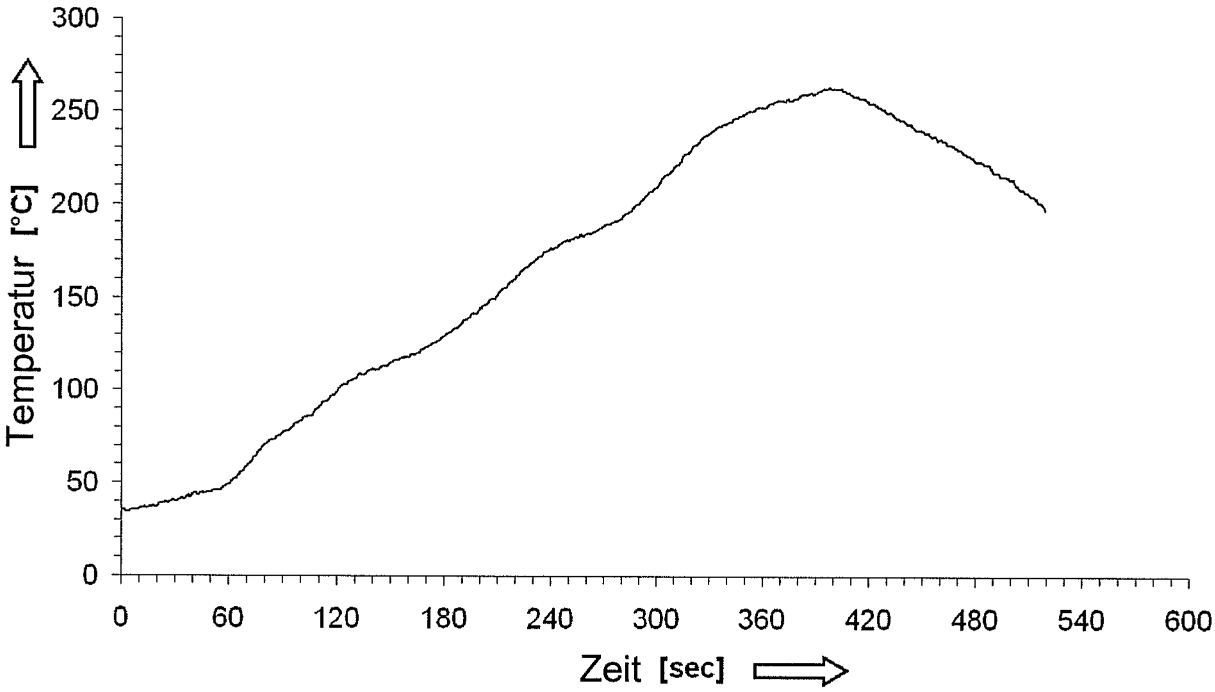
300
250
200
150
100
50
0
Temperatur [°C]
0
60
120
180
240
300
360
420
480
540
600
Zeit [sec]

FIG. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4607073 A
- JP 2928325 B
- JP 308846 A
- EP 1988113 A
- US 4617342 A
- GB 1228761 A
- US 4831108 A
- EP 1795632 A
- DE 10346326